# DEMANDE DE BREVET EUROPEEN

(11) **EP 4 847 905 A1**
(43) Date de publication de la demande: **02.12.2026**
(21) Numéro de dépôt: 26181658.1
(22) Date de dépôt: 28.05.2026
(51) Int. Cl.: G01N 15/1433, G01N 15/1434, G01P 5/20, G06T 7/00, G06V 20/20, G06V 20/69, G01N 15/10

(54) **PROCÉDÉ DE CARACTÉRISATION DU MOUVEMENT D'UN LIQUIDE DANS UNE CHAMBRE FLUIDIQUE**

(30) Priorité: 29.05.2025 FR 2505823
(71) Demandeur: Commissariat à l'Energie Atomique et aux Energies Alternatives, 75015 Paris (FR)
(72) Inventeur: MANDULA, Ondrej, 38054 GRENOBLE CEDEX 09 (FR); CIONI, Olivier, 38054 GRENOBLE CEDEX 09 (FR)
(74) Mandataire: INNOV-GROUP

(57) **Abrégé**

Procédé de caractérisation d'un échantillon (10), l'échantillon comportant une chambre fluidique comportant un liquide (10ₘ) et des particules mobiles (10ᵢ) baignant dans le liquide, le procédé comportant:
a) acquisition de plusieurs images (*I, Iₙ*) de l'échantillon durant une période d'acquisition, à l'aide d'un capteur d'image (20), définissant un champ d'observation;
b) à partir de chaque image résultant de a), formation d'une image d'observation représentant les particules de l'échantillon, dans le champ d'observation, durant la période d'acquisition ;
c) utilisation de l'image d'observation résultant de a) en tant qu'image d'entrée d'un algorithme de détection, programmé pour déterminer un mouvement du liquide dans la chambre fluidique durant la période d'acquisition.

## Description

### DOMAINE TECHNIQUE

Le domaine technique de l'invention est l'observation de particules microscopiques mobiles ou motiles dans un échantillon, en vue de leur caractérisation. Une application visée est la caractérisation de spermatozoïdes.

### ART ANTERIEUR

L'observation de particules cellulaires motiles, telles des spermatozoïdes, dans un échantillon, est usuellement effectuée à l'aide d'un microscope. Le microscope comporte un objectif définissant un plan objet, s'étendant dans l'échantillon, ainsi qu'un plan image, confondu avec un plan de détection d'un capteur d'image.

La demande de brevet US20240044771 décrit un procédé permettant une caractérisation de spermatozoïdes en utilisant un dispositif d'acquisition d'image formant des données d'entrée d'un réseau de neurones. Le dispositif d'acquisition peut être de type imagerie défocalisée ou sans lentille. Dans ce procédé, une chambre fluidique comportant des spermatozoïdes dans un liquide, est observée en durant une période d'acquisition. L'observation permet de former une image, sur la base de laquelle on estime des caractéristiques de mobilité des spermatozoïdes.

Cependant, l'introduction du liquide dans la chambre fluidique peut être suivie d'un mouvement du liquide, à l'intérieur de la chambre. La survenue d'un tel mouvement peut conduire à une analyse erronée des caractéristiques de mobilité des spermatozoïdes.

Dans l'art antérieur, citons par exemple :
- JP2008026033, qui décrit un dispositif de vélocimétrie de particules, de façon à caractériser la vitesse d'un fluide par des images des particules, ces dernières étant immobiles par rapport au fluide.
- JP2019095403, qui décrit un dispositif pour estimer la vitesse d'un fluide, en imageant, par rayon X, des particules immiscibles, et immobiles par rapport au fluide.
- EP0436125, qui décrit le recours à une image pour caractériser le mouvement d'un fluide, qui comporte des particules immobiles par rapport au fluide.
- US2007107512, qui décrit une méthode pour mesurer le débit d'un fluide, à l'aide d'images résultant de la diffusion de la lumière par le fluide.

Les inventeurs proposent un procédé visant à fiabiliser l'analyse des spermatozoïdes, et plus généralement l'analyse de particules mobiles dans une chambre fluidique. Il s'agit de détecter un mouvement du liquide, durant la période d'acquisition, suffisamment important pour perturber l'analyse du mouvement des particules, par effet de flou. La détection est préférentiellement effectuée rapidement, sans consommation élevée de ressources mémoires.

### EXPOSE DE L'INVENTION

Un premier objet de l'invention est un procédé de caractérisation d'un échantillon, l'échantillon comportant un liquide et des particules mobiles baignant dans le liquide, le procédé comportant:
a) acquisition de plusieurs images de l'échantillon durant une période d'acquisition, à l'aide d'un capteur d'image, définissant un champ d'observation;
b) à partir de chaque image résultant de a), formation d'une image d'observation représentant les particules de l'échantillon, dans le champ d'observation, durant la période d'acquisition ;
c) utilisation de l'image d'observation résultant de b) en tant qu'image d'entrée d'un algorithme de détection, programmé pour déterminer un mouvement du liquide dans la chambre fluidique durant la période d'acquisition.

L'étape c) peut comporter :
- c-1) obtention de fréquences spatiales de l'image d'observation ;
- c-2) détection d'une non uniformité des fréquences spatiales de l'image d'observation.

Selon une possibilité :
- dans la sous-étape étape c-1), à chaque fréquence spatiale est assignée une coordonnée angulaire, correspondant à un angle formé par rapport un axe de référence ;
- la sous-étape c-2) comporte un calcul d'un indicateur d'hétérogénéité des fréquences spatiales de l'image d'observation parmi les différentes coordonnées angulaires.

La sous-étape c-2) peut comporter :
- c-2i) intégration des puissances spectrales correspondant une même coordonnée angulaire, et cela pour différentes coordonnées angulaires, de façon à obtenir une puissance angulaire pour chaque coordonnée angulaire ;
- c-2ii) calcul de l'indicateur d'hétérogénéité à partir des puissances angulaires obtenues pour chaque coordonnée angulaire.

L'indicateur d'hétérogénéité peut quantifier l'hétérogénéité d'une distribution des puissances Selon une possibilité c-2ii) comporte :
- détermination d'une valeur de normalisation, correspondant à un pourcentage de la puissance angulaire maximale parmi les puissances angulaires obtenues pour chaque coordonnée angulaire ;
- normalisation de chaque puissance angulaire par la valeur de normalisation, de façon à obtenir une puissance angulaire normalisée pour chaque coordonnée angulaire.

Selon une possibilité, le procédé comporte un calcul d'un indicateur statistique d'une distribution formée par les puissances angulaires normalisées. Le procédé peut être tel que l'indicateur d'hétérogénéité est une comparaison de l'indicateur statistique à une valeur de comparaison.

L'indicateur statistique peut être un fractile de la distribution.

L'indicateur d'hétérogénéité peut être un nombre de coordonnées angulaires pour lesquelles la puissance angulaire normalisée est dans une plage de valeurs prédéterminée.

L'algorithme de détection peut être un algorithme d'intelligence artificielle à apprentissage supervisé.

L'algorithme d'intelligence artificielle à apprentissage supervisé peut être un réseau de neurones convolutif.

Selon une possibilité :
- l'échantillon s'étend selon un plan de l'échantillon;
- le capteur d'image s'étend selon un plan de détection;
- un système optique s'étend entre l'échantillon et le capteur d'image, le système optique définissant un plan objet et un plan image;
- le plan objet est décalé par rapport au plan de l'échantillon d'une distance de défocalisation objet et/ou le plan image est décalé par rapport au plan de l'échantillon d'une distance de défocalisation image, de façon que lors de l'étape a), chaque image de l'échantillon est acquise selon une modalité d'imagerie défocalisée.

Selon une possibilité, aucune optique de formation d'image ne s'étend entre l'échantillon et le capteur d'image, de façon que lors de l'étape a), chaque image de l'échantillon est acquise selon une modalité d'imagerie sans lentille.

Selon une possibilité, chaque image de l'échantillon est acquise selon une modalité d'imagerie interférentielle.

Selon une possibilité avantageuse, dans l'étape b), l'image d'observation est obtenue par une combinaison des images acquises lors de l'étape a). La combinaison peut être une somme.

Avantageusement :
- chaque image acquise et l'image d'observation sont définies selon des pixels ;
- la valeur de l'image d'observation pour un pixel, est la valeur maximale, audit pixel, de l'ensemble des images acquises.

Selon une possibilité, les particules sont des spermatozoïdes.

Un deuxième objet de l'invention est un dispositif d'observation d'un échantillon, l'échantillon comportant des particules mobiles, le dispositif comportant :
- une source de lumière, configurée pour illuminer l'échantillon ;
- un capteur d'image, configuré pour former une image de l'échantillon ;
- une unité de traitement, reliée au capteur d'image, et configurée pour mettre en œuvre les étapes b) et c) d'un procédé selon le premier objet de l'invention à partir d'images acquises par le capteur d'image.

L'invention sera mieux comprise à la lecture de l'exposé des exemples de réalisation présentés, dans la suite de la description, en lien avec les figures listées ci-dessous.

### FIGURES

La figure 1 représente un premier mode de réalisation de dispositif permettant une mise en œuvre de l'invention.
La figure 2 représente un deuxième mode de réalisation de dispositif permettant une mise en œuvre de l'invention.
La figure 3 montre les principales étapes d'un procédé de mise en œuvre de l'invention.
La figure 4 montre différentes images acquises au cours d'une période d'acquisition.
Les figures 5A et 5B montrent des images d'observation d'un échantillon sans mouvement de liquide respectivement.
Les figures 6A et 6B sont des expressions fréquentielles des images représentées sur les figures 5A et 6B respectivement.
Les figures 7A et 7B sont des représentations, en coordonnées polaires, des figures 6A et 6B respectivement.
Les figures 8A et 8B sont des profils d'intensité normalisés respectivement obtenus à partir des représentations en coordonnées polaires des figures 7A et 7B.
La figure 9A montre l'évolution d'une fonction de mérite en fonction d'un seuil paramétrant un algorithme de détection d'hétérogénéité.
La figure 9B montre l'évolution d'une fonction de mérite en fonction d'un seuil paramétrant un algorithme de détection d'hétérogénéité des fréquences spatiales d'une image d'observation de l'échantillon.

### EXPOSE DE MODES DE REALISATION PARTICULIERS

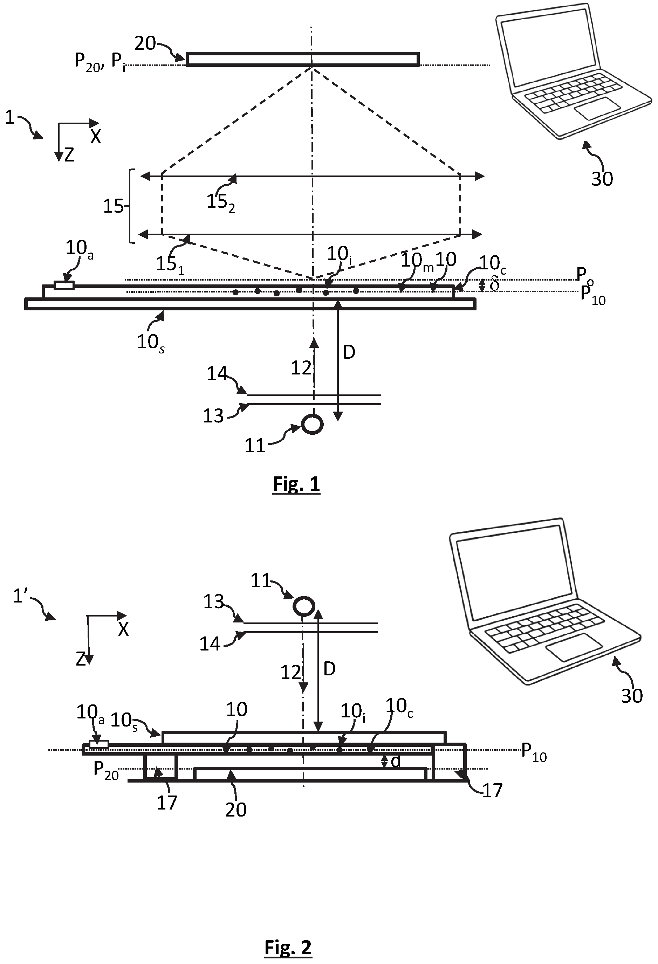

On a représenté, sur la figure 1, un premier mode de réalisation d'un dispositif 1 permettant une mise en œuvre de l'invention. Selon ce premier mode de réalisation, le dispositif permet l'observation d'un échantillon 10 interposé entre une source de lumière 11 et un capteur d'image 20. La source de lumière 11 est configurée pour émettre une onde lumineuse incidente 12 se propageant jusqu'à l'échantillon parallèlement à un axe de propagation Z.

Le dispositif comporte un support d'échantillon 10s configuré pour recevoir l'échantillon 10, de sorte que l'échantillon soit maintenu sur le support 10s. L'échantillon ainsi maintenu s'étend selon un plan, dit plan d'échantillon P₁₀. Le plan de l'échantillon correspond par exemple à un plan moyen autour duquel s'étend l'échantillon 10. Le support d'échantillon peut être une lame de verre, par exemple d'épaisseur 20 µm. L'épaisseur peut être comprise entre 10 µm et 1 mm, et de préférence entre 10 µm et 500 µm ou entre 10 µm et 100 µm.

L'échantillon comprend notamment un liquide 10ₘ dans lequel baignent des particules mobiles et éventuellement motiles 10ᵢ. Le liquide 10ₘ peut être un liquide biologique ou un liquide tampon. Il peut par exemple comporter un liquide corporel, à l'état pur ou dilué. Par liquide corporel, on entend un liquide généré par un corps vivant. Il peut en particulier s'agir, à titre non limitatif, de sang, d'urine, de liquide céphalorachidien, de sperme, de lymphe.

L'échantillon 10 est de préférence contenu dans une chambre fluidique 10_{c}. La chambre fluidique est par exemple une chambre fluidique d'épaisseur, comprise entre 20 µm et 100 µm. L'épaisseur de la chambre fluidique, et donc de l'échantillon 10, selon l'axe de propagation Z, varie typiquement entre 10 µm et 200µm, et est de préférence comprise entre 20 µm et 50 µm µm. La chambre fluidique comporte une ouverture 10ₐ, par laquelle l'échantillon est introduit avant l'acquisition des images. Le volume de liquide introduit peut être de quelques µL, par exemple 3 µL.

Un des objectifs de l'invention est la caractérisation de particules en mouvement dans l'échantillon. Dans l'exemple de réalisation décrit, les particules mobiles sont des spermatozoïdes. Dans ce cas, l'échantillon comporte du sperme, éventuellement dilué. Dans ce cas, la chambre fluidique 10_{c} peut être une chambre de comptage dédiée à l'analyse de la mobilité ou de la concentration de cellules. Il peut par exemple s'agir d'une chambre de comptage commercialisées par Leja, d'épaisseur comprise entre 20 µm et 100 µm.

Un procédé de caractérisation de spermatozoïdes a été décrit dans la demande FR2407923 déposée le 18/07/2025. La caractérisation des particules peut être réalisée sur la base d'une image représentant les trajectoires des particules. L'image des trajectoires est une image sur laquelle apparaît les trajectoires des spermatozoïdes durant une période d'acquisition.

Selon d'autres applications, l'échantillon comporte des particules mobiles, par exemple des microorganismes, par exemple microalgues ou plancton, ou des cellules, par exemple des cellules en cours de sédimentation.

La distance D entre la source de lumière 11 et l'échantillon 10 est de préférence supérieure à 1 cm. Elle est de préférence comprise entre 2 et 30 cm, par exemple 5 cm. Avantageusement, la source de lumière 11, vue par l'échantillon, est considérée comme ponctuelle. Cela signifie que son diamètre (ou sa diagonale) est préférentiellement inférieur au dixième, mieux au centième de la distance entre l'échantillon et la source de lumière.

La source de lumière 11 est par exemple une diode électroluminescente. Dans l'exemple décrit, la lumière est émise selon une la longueur d'onde de 450 nm. Elle est de préférence associée à un diaphragme 14, ou filtre spatial. L'ouverture du diaphragme est typiquement comprise entre 5 µm et 1 mm, de préférence entre 50 µm et 1 mm. Dans cet exemple, le diaphragme a un diamètre est de 400 µm. Selon une autre configuration, le diaphragme peut être remplacé par une fibre optique, dont une première extrémité est placée face à la source de lumière et dont une deuxième extrémité est placée en regard de l'échantillon 10. Le dispositif peut également comporter un diffuseur 13, disposé entre la source de lumière 13 et le diaphragme 14. Le recours à un assemblage diffuseur/diaphragme est par exemple décrit dans US10418399.

Le capteur d'image 20 est configuré pour former une image de l'échantillon selon un plan de détection P₂₀. Dans l'exemple représenté, le capteur d'image 20 comporte une matrice de pixels, de type CCD ou un CMOS. Le plan de détection P₂₀ s'étend de préférence perpendiculairement à l'axe de propagation Z. De préférence, le capteur d'image présente une surface sensible élevée, typiquement supérieure à 10 mm². Dans cet exemple, le capteur d'image est un capteur IDS-UI-3160CP-M-GL comportant des pixels de 4.8x4.8 µm², la surface sensible étant de 9.2 mm x 5.76 mm, soit 53 mm².

Dans l'exemple représenté sur la figure 1, le capteur d'image 20 est optiquement couplé à l'échantillon 10 par un système optique 15. Dans l'exemple représenté, le système optique comporte un objectif 15₁ et une lentille de tube 15₂. Cette dernière est destinée à projeter une image formée, sur la surface sensible du capteur d'image 20 (surface de 53 mm²). La fréquence d'acquisition d'images est par exemple de 60 images par secondes, le temps de pose étant de 2 ms par image.

Dans cet exemple :
- l'objectif 15₁ est un objectif Motic CCIS EF-N Plan Achromat 10x, d'ouverture numérique 0.25 ;
- la lentille 15₂ est une lentille Thorlabs LBF254-075-A - focale 75 mm.

Un tel montage confère un champ d'observation de 3 mm², avec une résolution spatiale de 1 µm.

Le système optique 15 définit un plan objet Pₒ et un plan image Pᵢ. Dans le mode de réalisation représenté sur la figure 1, le capteur d'image 20 est configuré pour acquérir une image selon une configuration défocalisée. Le plan image Pᵢ est confondu avec le plan de détection P₂₀, tandis que le plan objet Pₒ est décalé d'une distance de focalisation objet δ comprise entre 10 µm et 500 µm, par rapport à l'échantillon. La distance de focalisation est de préférence comprise entre 50 µm et 200 µm, par exemple 100 µm. Le plan objet Pₒ s'étend en dehors de l'échantillon 10. Selon une autre possibilité, le plan objet s'étend dans l'échantillon, tandis que le plan image est décalé par rapport au plan de détection, d'une distance de défocalisation image. La distance de focalisation image est de préférence comprise entre 50 µm et 200 µm, par exemple 100 µm. Selon une autre possibilité, le plan objet Pₒ et le plan image Pᵢ sont tous les deux décalés respectivement par rapport au plan de l'échantillon et par rapport au plan de détection. Quelle que soit la configuration retenue, la distance de défocalisation est de préférence supérieure à 10 µm et inférieure à 1 mm, voire à 500 µm, et de préférence entre 50 µm et 150 µm. L'observation d'un échantillon cellulaire selon une configuration défocalisée a été décrit dans le brevet US10545329.

Un avantage de l'imagerie défocalisée est qu'elle permet d'observer des particules translucides ou transparentes, selon un contraste satisfaisant.

Selon une possibilité, chaque image acquise peut faire l'objet d'un algorithme de reconstruction numérique, de façon à améliorer la résolution spatiale. On sait que le recours à des algorithmes de reconstruction numérique permet d'obtenir des images nettes de particules. De tels algorithmes sont par exemple décrits dans US10564602, US20190101484 ou US20200124586. Dans ce type d'algorithme, à partir d'un hologramme acquis dans un plan de détection, on reconstruit une image de l'échantillon dans un plan de reconstruction, distant du plan de détection. Il est usuel que le plan de reconstruction d'étende à travers l'échantillon. Cependant, ce type d'algorithme peut nécessiter un temps de calcul relativement long. L'invention s'est avérée performante, dans le cas de la caractérisation de spermatozoïdes, à partir d'images acquises par le capteur d'image (hologrammes), sans mise en œuvre de l'algorithme de reconstruction.

Il est connu que l'imagerie sans lentille, couplée à des algorithmes de reconstruction holographique, permet une observation de cellules transparentes ou translucides en conservant un champ d'observation élevé, ainsi qu'une grande profondeur de champ. Les brevets US9588037 ou US8842901 décrivent par exemple le recours à l'imagerie sans lentille pour l'observation de spermatozoïdes. Les brevets US10481076 ou US10379027 décrivent également le recours à l'imagerie sans lentille, couplée à des algorithmes de reconstruction, pour caractériser des cellules.

Le dispositif comporte une unité de traitement 30, configurée pour mettre en œuvre des étapes de traitement des images acquises par le capteur d'image. Il s'agit notamment de la formation et de l'analyse d'une image d'observation décrite par la suite. L'unité de traitement peut notamment comporter un microprocesseur.

La figure 2 représente un deuxième mode de réalisation de dispositif 1' convenant à la mise en œuvre de l'invention. Le dispositif 1' comporte une source de lumière 11, un diffuseur 13, un diaphragme 14, un capteur d'image 20, une structure de maintien 17 et une unité de traitement 30 tels que décrite en lien avec le premier mode de réalisation. La structure de maintien 17 est configurée pour définir une distance fixe entre l'échantillon et le capteur d'image. Selon ce mode de réalisation, le dispositif ne comporte pas de lentille de formation d'image entre le capteur d'image 20 et l'échantillon 10. Le capteur d'image 20 est de préférence rapproché de l'échantillon, la distance entre le capteur d'image 20 et l'échantillon 10 étant typiquement comprise entre 100 µm et 3 mm. Selon ce mode de réalisation, le capteur d'image acquiert des images selon une modalité d'imagerie sans lentille. L'échantillon est de préférence contenu dans une chambre fluidique 10_{c}, par exemple une chambre « Leja » telle que décrite en lien avec le premier mode de réalisation. L'avantage d'un tel mode de réalisation est qu'il ne nécessite pas un positionnement précis d'un système optique 15 par rapport à l'échantillon 10, et qu'il confère un champ d'observation élevé. L'inconvénient est l'obtention d'images de moindre qualité, mais qui demeurent exploitables.

D'autres systèmes d'imagerie de diffraction ou interférométriques peuvent être mis en œuvre. Il peut par exemple s'agir de systèmes d'imagerie à contraste de phase.

Les modalités d'imagerie précédemment décrites conviennent à des particules transparentes ou translucides. Lorsque les particules sont suffisamment opaques, on peut mettre en œuvre un imageur classique, focalisé sur l'échantillon.

Une difficulté peut survenir lorsque la chambre fluidique est remplie par le liquide comportant les spermatozoïdes. En effet, en fonction de la façon dont le liquide est introduit, ce dernier peut se maintenir en mouvement à l'intérieur de la chambre fluidique pendant un certain temps, par exemple quelques secondes ou quelques dizaines de secondes. C'est par exemple le cas lorsque le liquide est introduit dans la chambre fluidique avec une pression trop importante. Avant de caractériser le déplacement des particules, il convient de s'assurer que le mouvement du liquide, à l'intérieur de la chambre fluidique, est suffisamment faible. En effet, lorsque le mouvement du liquide est trop important, cela induit des erreurs dans l'évaluation des caractéristiques de déplacement des particules.

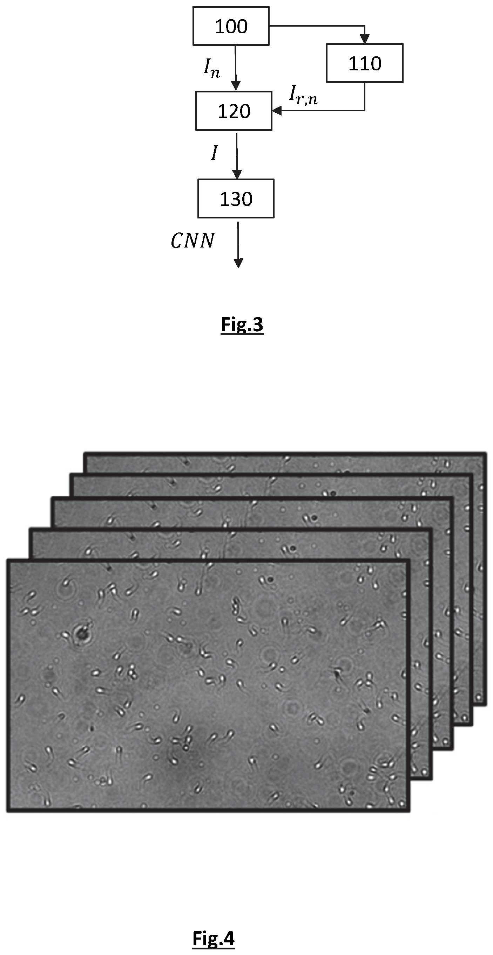

La figure 3 schématise les principales étapes d'un procédé de traitement de plusieurs images acquises par un capteur d'image selon la modalité d'imagerie défocalisée. Le procédé est décrit en lien avec l'observation de spermatozoïdes, étant entendu qu'il peut s'appliquer à l'observation d'autres types de particules mobiles dans un liquide.

### Etape 100 : acquisition d'une série d'images Iₙ.

Au cours de cette étape, des images de l'échantillon sont acquises en différents instants d'acquisition *tₙ,* à chaque instant correspondant une image acquise *Iₙ.* Les instants d'acquisition s'étendent entre un instant initial et un instant final. On obtient une pile d'images acquises, comme représenté sur la figure 4.

### Etape 110 : reconstruction holographique (étape optionnelle)

Au cours de cette étape, on applique un algorithme de reconstruction holographique à chaque image acquise *Iₙ*, de façon à former une image *I_{r,n}* de l'échantillon à chaque instant d'acquisition *tₙ.* Cette étape n'est pas indispensable.

### Etape 120 : formation d'une image d'observation

Au cours de cette étape, on forme une image d'observation *I*. Le terme image d'observation désigne le fait que l'image permet une observation de l'échantillon, et de son évolution, de l'instant initial jusqu'à l'instant final. L'image d'observation *I* peut être formée par une combinaison des images acquises *Iₙ* lors de l'étape 100 ou, éventuellement, des images reconstruites *I_{r,n}* au cours de l'étape 110.

Chaque image acquise *Iₙ* est définie selon des pixels *(x, y). (x,* y) désignent des coordonnées dans le plan de détection défini par le capteur d'image.

Une façon d'obtenir l'image d'observation *I* est de prendre, en chaque pixel (*x, y*)*,* une valeur extrémale de l'ensemble des images acquises *Iₙ* ou reconstruites *I_{r,n}.*

Pour établir l'image d'observation, on peut prendre en compte la valeur maximale de chaque image acquise (ou de chaque image reconstruite).

La valeur de chaque pixel de l'image d'observation est alors$I \left(x, y\right) = {max}_{n} {I}_{n} \left(x, y\right)$ (1)..

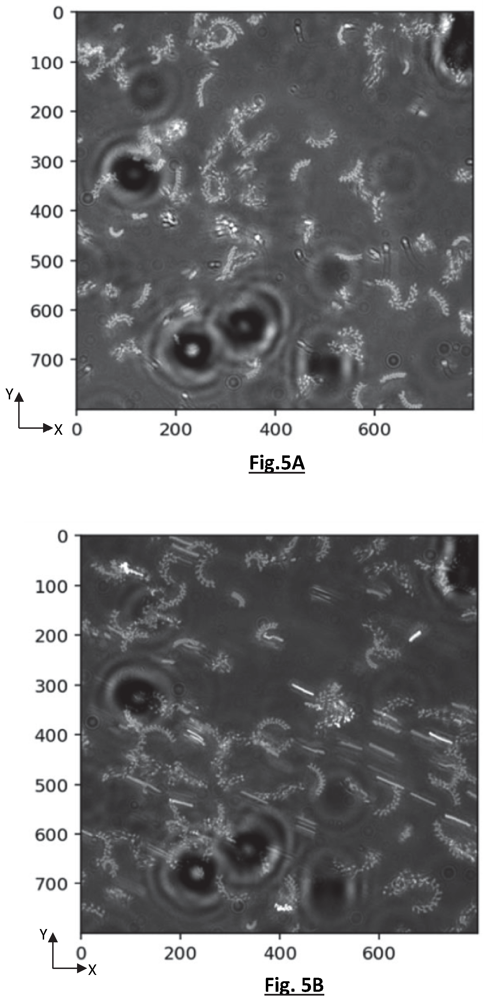

Les figures 5A et 5B montrent des exemples d'images d'observation, obtenues par une combinaison de 30 images acquises, à la fréquence d'acquisition de 60 images par secondes, alors que le liquide est respectivement mobile ou immobile. La période d'acquisition est de 0.5 seconde. Sur la figure 5B, le déplacement du liquide se traduit par des segments linéaires. Chaque segment correspond à une particule immobile par rapport au liquide. Il peut s'agir d'une poussière, ou d'un spermatozoïde immobile dans le liquide.

La présence de particules immobiles par rapport au liquide n'est pas nécessaire. L'invention peut être mise en œuvre lorsque toutes les particules sont mobiles par rapport au liquide. Lorsque le liquide comporte des particules immobiles par rapport au liquide, l'image d'observation comporte des segments linéaires comme montré sur la figure 5B, ce qui rend le mouvement de liquide aisément détectable. En l'absence de particules immobiles par rapport au fluide, le mouvement du liquide est également détectable par une analyse spectrale, comme décrit dans l'étape 130.

### Etape 130 : Détection d'un mouvement du liquide, dans la chambre fluidique, durant la période d'acquisition.

Au cours de cette étape, l'image d'observation est utilisée en tant que donnée d'entrée d'un algorithme de détection, configuré pour évaluer une distance de déplacement du liquide durant la période d'acquisition. Il s'agit de détecter, sur l'image d'observation, la présence de motifs traduisant un déplacement du liquide durant la période d'acquisition.

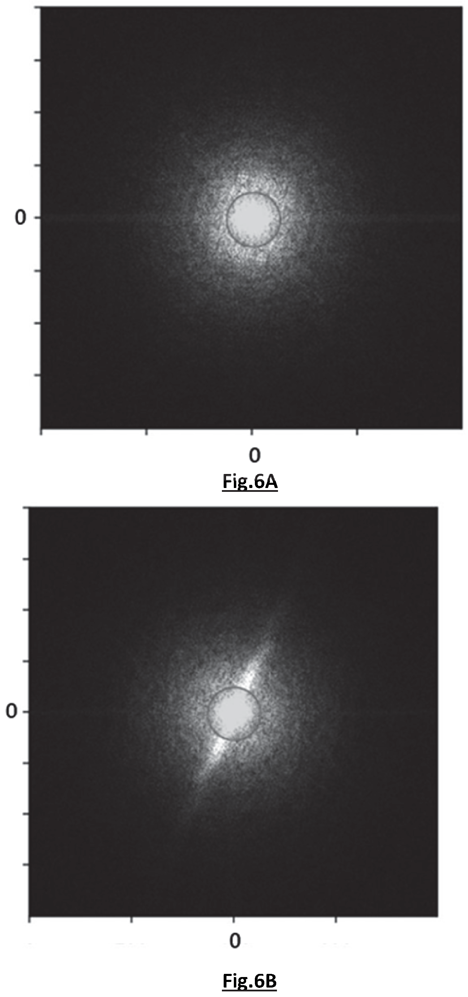

Selon une première possibilité, l'algorithme de détection est basé sur une analyse fréquentielle de l'image d'observation. Il s'agit d'obtenir une expression fréquentielle de l'image d'observation, par exemple par transformée de Fourier, permettant de déterminer les fréquences spatiales de l'image, et de détecter d'éventuelles fréquences spatiales dominantes. Les figures 6A et 6B représentent des transformées de Fourier des figures 5A et 5B respectivement. Les axes des abscisses et des ordonnées représentent respectivement les fréquences spatiales selon les axes X et Y des figures 5A et 5B. En l'absence de mouvement du liquide dans la chambre fluidique, la transformée de Fourier peut être considérée comme radialement homogène, autour de l'origine du repère qui correspond à une fréquence spatiale nulle. A chaque point peut être assigné une coordonnée angulaire, qui correspond à un angle entre un rayon, reliant ledit point à l'origine, et un axe de référence prédéterminé, par exemple l'axe X. Par radialement homogène, on entend que les fréquences spatiales à une même distance de l'origine ont sensiblement la même valeur, quelle que soit la coordonnée angulaire. En présence d'un mouvement du liquide lors de la période d'acquisition, les fréquences spatiales de l'image d'observation comportent des inhomogénéités, pour certaines coordonnées angulaires que l'on peut observer sur la figure 6B : il s'agit d'extensions s'étendant radialement à partir d'une zone homogène, matérialisée par un cercle sur les figures 6A et 6B. Ainsi, la puissance spectrale de certaines fréquences spatiales sont plus élevées, qui correspondent aux fréquences spatiales pour les coordonnées angulaires représentatives de la direction de déplacement du liquide.

On comprend qu'une analyse des fréquences spatiales de l'image d'observation permet de détecter la présence d'une hétérogénéité pour certaines coordonnées angulaires, qui correspond à une signature d'un mouvement du liquide durant la période d'acquisition.

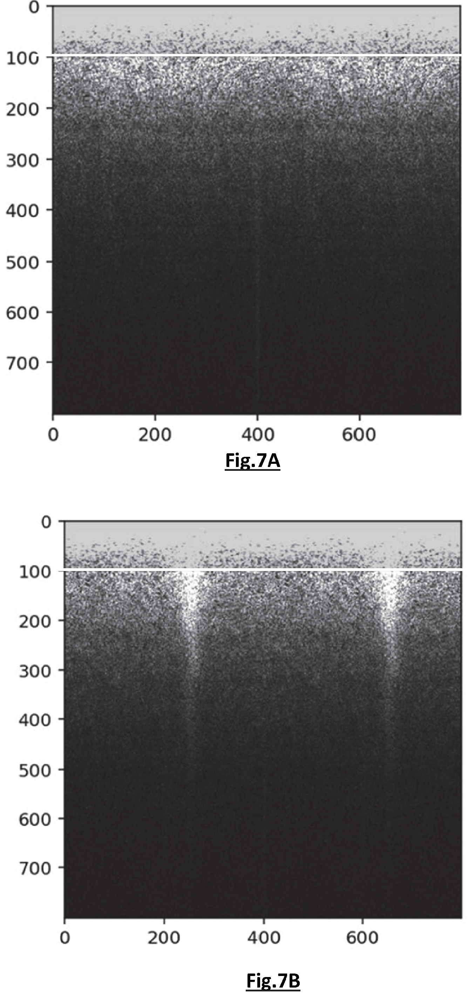

Les figures 7A et 7B sont des représentations en coordonnées polaires, résultant d'une transformation polaire des figures 6A et 6B respectivement. Sur chacune de ces figures, l'axe des ordonnées correspond à une coordonnée radiale, c'est-à-dire une distance, par rapport à l'origine du repère des figures 6A ou 6B. Les points situés à une même coordonnée radiale correspondent à une fréquence spatiale de même valeur (même norme). Sur les figures 7A et 7B, les coordonnées polaires ont été discrétisées selon 800 valeurs. L'axe des abscisses correspond à la coordonnée angulaire, l'axe de référence étant l'axe X, et le rayon passant par l'origine. Les coordonnées angulaires définissent les orientations de chaque fréquence spatiale. Les figures 7A et 7B montrent qu'en présence d'un mouvement du liquide, l'hétérogénéité des fréquences spatiales se traduit par des marques rectilignes à certaines coordonnées angulaires.

Ces coordonnées angulaires sont liées à la direction du mouvement du liquide dans la chambre fluidique. Sur les figures 7A et 7B, le niveau de gris traduit la puissance spectrale.

L'algorithme de détection est programmé pour détecter la présence d'une hétérogénéité des fréquences spatiales de l'image d'observation. Il s'agit de calculer un indicateur d'hétérogénéité, dont la valeur est comparée à une valeur seuil, en fonction de quoi l'image d'observation est considérée comme représentative de l'absence ou de la présence d'un mouvement de liquide dans la chambre fluidique.

Selon une possibilité, l'indicateur d'hétérogénéité est calculé en intégrant les puissances spectrales pour chaque coordonnée angulaire. Si l'on se réfère aux figures 7A et 7B, il s'agit d'intégrer les puissances spectrales selon des lignes verticales.

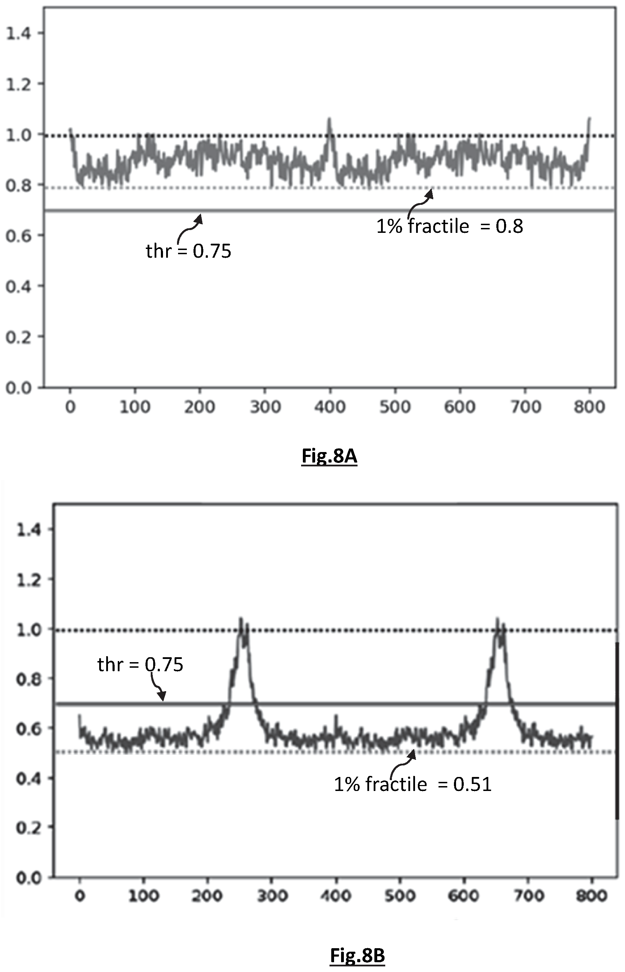

Les figures 8A et 8B montrent, pour différentes coordonnées angulaires (axe des abscisses), la puissance spectrale intégrée (axe des ordonnées), et cela respectivement à partir d'une partie des figures 7A et 7B. Plus précisément, pour former les figures 8A et 8B, on a exclu, des figures 7A et 7B, les puissances spectrales en deçà d'un certain seuil de fréquence spatiale. En effet, pour les faibles fréquences spatiales, les puissances spectrales sont homogènes. Leur prise en compte n'apporte pas d'information, et peut même être une source de bruit. En effet, les fréquences spatiales faibles sont dominantes, ce qui peut masquer l'information relative au mouvement du fluide, dans les fréquences spatiales plus élevées, dont la puissance spectrale est plus faible. Ainsi, il est préférable, mais non nécessaire, d'exclure les fréquences spatiales inférieures au seuil de fréquence spatiale du calcul de l'indicateur d'hétérogénéité. Le seuil de fréquence spatiale peut être défini au cas par cas, sur la base d'essais expérimentaux.

Sur les figures 7A et 7B, le seuil de fréquence spatiale a été matérialisé par une ligne blanche. Ainsi, les figures 8A et 8B sont, pour chaque coordonnée angulaire, la somme des puissances spectrales pour les fréquences spatiales supérieures au seuil de fréquence spatiale. Par la suite, la somme des puissances spectrales pour une même coordonnée angulaire est désignée puissance angulaire, car il s'agit d'une intégration des puissances spectrales pour la même coordonnée angulaire, le long d'un même rayon sur les représentations des figures 6A et 6B.

Sur chacune des figures 8A et 8B, les puissances angulaires ont été normalisées par un certain percentile, en l'occurrence le percentile à 99% de la distribution des puissances spectrales établie pour l'ensemble des coordonnées angulaires. Chaque figure correspond à profil normalisé de puissance angulaire pour chaque coordonnée angulaire. Sur la figure 8A, représentant un liquide immobile, ou pouvant être considéré comme tel, les valeurs de puissances angulaires sont peu dispersées. A l'inverse, sur la figure 8B, les valeurs de puissance angulaires sont dispersées, et deux pics traduisent le niveau plus élevé de puissance spectrale pour deux coordonnées angulaires différentes.

La normalisation par un percentile à 99% permet de ne pas tenir compte d'éventuelles singularités de la distribution (outliers).

A partir des figures 8A ou 8B, on peut aisément calculer un indicateur d'hétérogénéité. Il peut par exemple s'agir d'un écart entre le pic d'amplitude maximale et la valeur moyenne. Plus l'écart est élevé, plus l'image est hétérogène, ce qui indique un mouvement du liquide durant la période d'acquisition.

Un autre exemple d'indicateur est le nombre de coordonnées angulaires pour lesquelles la puissance angulaire, après une éventuelle normalisation, est comprise dans une plage de valeurs prédéterminée. Par exemple, sur les exemples des figures 8A et 8B, on remarque que le nombre de coordonnées angulaires pour lesquelles la puissance angulaire normalisée est supérieure à 0.75 est de 100% sur la figure 8A, et nettement plus faible sur la figure 8B : ainsi, le nombre de coordonnées angulaires pour lesquelles la puissance angulaire est inférieure à un seuil, peut former un indicateur d'hétérogénéité. D'une façon plus générale, l'indicateur d'hétérogénéité de la distribution des puissances angulaires peut être déterminé en fonction du nombre de coordonnées angulaires pour lesquelles la puissance angulaire est comprise dans une plage de valeurs prédéterminée.

Un autre exemple d'indicateur est la valeur d'une grandeur statistique relative à la distribution des puissances angulaires. Les inventeurs ont déterminé la valeur du fractile à 1% de la distribution des puissances angulaires. Sur les figures 8A et 8B, on a matérialisé le fractile à 1% par une ligne en pointillés. La valeur seuil thr de 0.75 a été matérialisée par une ligne pleine. La comparaison du fractile à 1% par rapport à la valeur seuil de 0.75 est un indicateur d'hétérogénéité : lorsque le liquide est immobile, les valeurs de puissance angulaires normalisées sont relativement homogènes. Le fractile à 1% est égal à 0.8 : il est supérieur à 0.75. En présence d'un mouvement de liquide, les valeurs de puissance angulaires normalisées sont plus hétérogènes : le fractile à 1% est égal à 0.51, donc inférieur à 0.75. Ainsi, la comparaison du fractile à 1% de la distribution formée par les puissances angulaires avec un seuil de comparaison thr, en l'occurrence 0.75, permet d'établir un indicateur d'hétérogénéité.

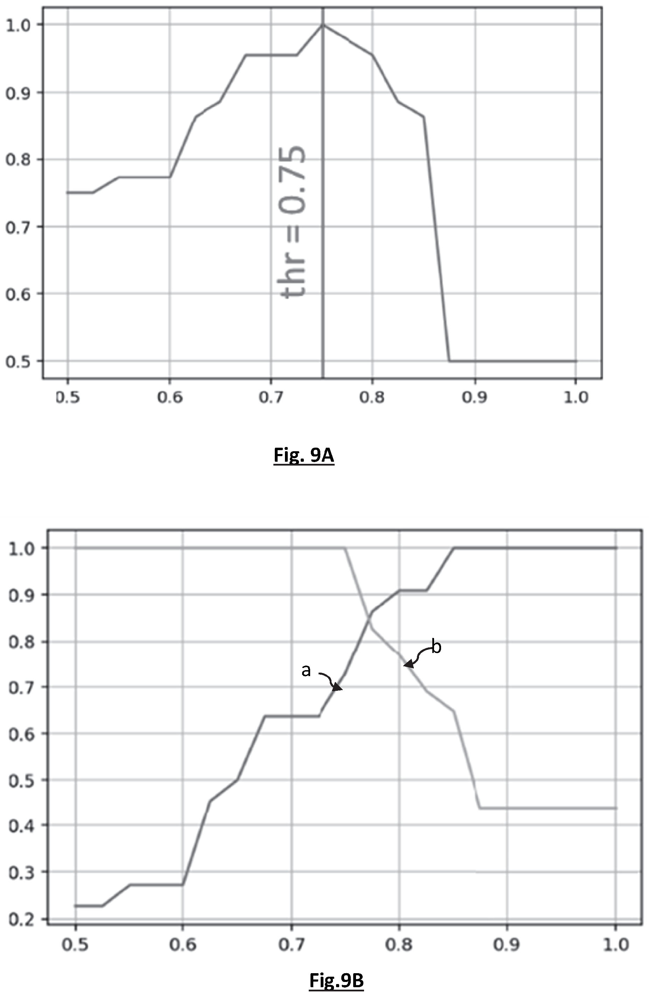

Le seuil de comparaison, auquel le fractile à 1% est comparé, peut être optimisé en utilisant des essais expérimentaux. La figure 9A représente des essais expérimentaux effectués en prenant en compte du sperme de bovins dilué, selon différents facteurs de dilution, dans différents tampons. On a mis en œuvre un dispositif tel que décrit sur la figure 1. 52 échantillons d'apprentissage ont été utilisés : sur 76 échantillons, le liquide a été introduit dans la chambre fluidique avec une pression volontairement élevée, de façon à induire un mouvement durant la période d'acquisition. Sur 76 échantillons, le liquide a été introduit soigneusement, de façon que le mouvement du liquide soit négligeable durant la période d'acquisition.

50 échantillons d'apprentissage (22 avec mouvement du liquide, 28 sans mouvement) ont été utilisés pour optimiser le seuil de comparaison. La figure 9A montre l'évolution d'une fonction de mérite en fonction du seuil de comparaison. La fonction de mérite correspond à une proportion de prédictions correctes.

La figure 9A montre l'évolution de la fonction de mérite en fonction du seuil de comparaison. Le seuil de comparaison de 0.75 maximise la fonction de mérite.

La figure 9B montre l'évolution du rappel (courbe a) et de la précision (courbe b) en fonction du seuil de comparaison (axe des abscisses).

On a testé l'algorithme tel que décrit en lien avec les figures 8A et 8B, sur 102 échantillons d'apprentissage n'ayant pas été utilisés pour définir le seuil de comparaison de 0.75. 54 échantillons d'apprentissage correspondaient à un mouvement de liquide et 48 ne présentaient pas de mouvement de liquide. On a obtenu la matrice de confusion représentée sur le tableau 1.

**Tableau 1**

| | Sans mouvement (vérité terrain) | Mouvement (vérité terrain) |
|---|---|---|
| sans mouvement détecté | 44 | 4 |
| Mouvement détecté | 7 | 47 |

Les essais de test, réalisés avec les 102 échantillons précédemment décrits, aboutissent à une précision de 0.92, ; un rappel de 0.87 et un F1-Score de 0.9. $F 1 - Score = 2 \times \frac{Precision \times Rappel}{Precision + Rappel}$ (1) avec $Precision = \frac{TP}{TP + FP}$ (3) et $Rappel = \frac{TP}{TP + FN}$ (4)
- TP = nombre de vrais positifs
- FP = nombre de faux positifs
- FN = nombre de faux négatifs
- Rappel correspond à la désignation anglosaxonne Recall.

Un avantage significatif d'un test de détection tel que précédemment décrit, basé sur une analyse d'une expression fréquentielle de l'image d'observation, est que le temps de traitement est court : de l'ordre de 150 ms : cela permet d'alerter rapidement un utilisateur d'un mouvement important du liquide.

Selon une variante, l'indicateur statistique utilisé est un autre fractile, par exemple un fractile à 5%, ou à 95%. Selon une possibilité, l'indicateur statistique peut être une valeur médiane (fractile à 50%), le seuil de comparaison étant la moyenne de la distribution des puissances angulaires. En l'absence de mouvement de liquide, la médiane est proche de la moyenne. En présence d'un mouvement de liquide, la médiane est plus éloignée de la moyenne. Ainsi, la comparaison de la moyenne et de la médiane permet de former un indicateur d'hétérogénéité de l'expression fréquentielle de l'image d'observation.

Sur la ;e 8B, la position des pics dépend de la direction du mouvement du liquide, cette dernière étant liée à la géométrie de la chambre fluidique, et plus précisément de la position de l'ouverture 10ₐ, par laquelle le liquide est introduit, par rapport au capteur d'image. Aussi, l'indicateur d'hétérogénéité peut être établi sur la base d'une détection d'un pic dans une plage de coordonnées angulaires prédéfinie.

Selon une autre approche, l'algorithme de détection peut être un algorithme d'intelligence artificielle à apprentissage supervisé, dont l'entrée est l'image d'observation. La sortie peut être une probabilité de mouvement de liquide dans l'échantillon au cours de la période d'acquisition. L'algorithme peut être de type réseau de neurones convolutifs, et faire l'objet d'un apprentissage avec des échantillons d'apprentissage tels que précédemment décrits.

## Revendications

1. Procédé de caractérisation d'un échantillon (10), l'échantillon comportant un liquide (10ₘ) et des particules mobiles (10ᵢ) baignant dans le liquide, les particules étant mobiles par rapport au liquide, le procédé comportant:
a) acquisition de plusieurs images (*I, Iₙ*) de l'échantillon durant une période d'acquisition, à l'aide d'un capteur d'image (20), définissant un champ d'observation;
b) à partir de chaque image résultant de a), formation d'une image d'observation représentant les particules de l'échantillon, dans le champ d'observation, durant la période d'acquisition ;
c) utilisation de l'image d'observation résultant de b) en tant qu'image d'entrée d'un algorithme de détection, programmé pour déterminer un mouvement du liquide dans la chambre fluidique durant la période d'acquisition,
le procédé étant **caractérisé en ce que** l'étape c) comporte :
- c-1) obtention de fréquences spatiales de l'image d'observation, à chaque fréquence spatiale étant assignée une coordonnée angulaire, correspondant à un angle formé par rapport un axe de référence ;
- c-2) calcul d'un indicateur d'hétérogénéité des fréquences spatiales de l'image d'observation parmi les différentes coordonnées angulaires, de façon à détecter une non uniformité des fréquences spatiales de l'image d'observation.

2. Procédé selon la revendication 1, dans lequel la sous-étape c-2) comporte :
- c-2i) intégration des puissances spectrales correspondant à une même coordonnée angulaire, de façon à obtenir une puissance angulaire pour chaque coordonnée angulaire ;
- c-2ii) calcul de l'indicateur d'hétérogénéité à partir des puissance angulaires obtenues pour chaque coordonnée angulaire.

3. Procédé selon la revendication 2, dans lequel c-2ii) comporte :
- détermination d'une valeur de normalisation, correspondant à un pourcentage de la puissance angulaire maximale parmi les puissances angulaires obtenues pour chaque coordonnée angulaire ;
- normalisation de chaque puissance angulaire par la valeur de normalisation, de façon à obtenir une puissance angulaire normalisée pour chaque coordonnée angulaire.

4. Procédé selon la revendication 3, comportant un calcul d'un indicateur statistique d'une distribution formée par les puissances angulaires normalisées, le procédé étant tel que l'indicateur d'hétérogénéité est une comparaison de l'indicateur statistique à une valeur de comparaison.

5. Procédé selon la revendication 4, dans lequel l'indicateur statistique est un fractile de la distribution.

6. Procédé selon la revendication 3, dans lequel l'indicateur d'hétérogénéité est un nombre de coordonnées angulaires pour lesquelles la puissance angulaire normalisée est dans une plage de valeurs prédéterminée.

7. Procédé selon la revendication 1, dans lequel l'algorithme de détection est un algorithme d'intelligence artificielle à apprentissage supervisé.

8. Procédé selon la revendication 7, dans lequel l'algorithme d'intelligence artificielle à apprentissage supervisé est un réseau de neurones convolutif.

9. Procédé selon l'une quelconque des revendications précédentes, dans lequel
- l'échantillon s'étend selon un plan de l'échantillon (P₁₀);
- le capteur d'image s'étend selon un plan de détection (P₂₀);
- un système optique (15) s'étend entre l'échantillon et le capteur d'image, le système optique définissant un plan objet (Pₒ) et un plan image (Pᵢ);
- le plan objet est décalé par rapport au plan de l'échantillon d'une distance de défocalisation objet et/ou le plan image est décalé par rapport au plan de l'échantillon d'une distance de défocalisation image, de façon que lors de l'étape a), chaque image de l'échantillon est acquise selon une modalité d'imagerie défocalisée.

10. Procédé selon l'une quelconque des revendications 1 à 8, dans lequel aucune optique de formation d'image ne s'étend entre l'échantillon et le capteur d'image, de façon que lors de l'étape a), chaque image de l'échantillon est acquise selon une modalité d'imagerie sans lentille.

11. Procédé selon l'une quelconque des revendications 1 à 8, dans lequel chaque image de l'échantillon est acquise selon une modalité d'imagerie interférentielle.

12. Procédé selon l'une quelconque des revendications précédentes, dans lequel dans l'étape b), l'image d'observation est obtenue par une combinaison des images acquises lors de l'étape a).

13. Procédé selon la revendication 12, dans lequel
- chaque image acquise et l'image d'observation sont définies selon des pixels ;
- la valeur de l'image d'observation pour un pixel, est la valeur maximale, audit pixel, de l'ensemble des images acquises.

14. Procédé selon l'une quelconque des revendications précédentes, dans lequel les particules sont des spermatozoïdes.

15. Dispositif (1, 1') d'observation d'un échantillon, l'échantillon comportant des particules mobiles, le dispositif comportant :
- une source de lumière (11), configurée pour illuminer l'échantillon ;
- un capteur d'image (20), configuré pour former une image de l'échantillon ;
- une unité de traitement (30), reliée au capteur d'image, et configurée pour mettre en œuvre les étapes b) et c) d'un procédé selon l'une quelconque des revendications précédentes à partir d'images acquises par le capteur d'image.
